(19) Europäisches Patentamt

European Patent Office

Office européen des brevets

(11) Veröffentlichungsnummer: **0 303 183**
**A2**

# (12) EUROPÄISCHE PATENTANMELDUNG

(21) Anmeldenummer: 88112699.9

(22) Anmeldetag: 04.08.88

(51) Int. Cl.⁴: **C08G 18/08 , C08G 18/66 , C08G 18/70**

(30) Priorität: 14.08.87 DE 3727128

(43) Veröffentlichungstag der Anmeldung:
**15.02.89 Patentblatt 89/07**

(84) Benannte Vertragsstaaten:
**AT BE CH DE ES FR GB IT LI NL SE**

(71) Anmelder: **BAYER AG**

**D-5090 Leverkusen(DE)**

(72) Erfinder: **Hess, Heinrich, Dr.**
**Körnerstrasse 5**
**D-5090 Leverkusen(DE)**
Erfinder: **Grögler, Gerhard, Dr.**
**von-Diergardt-Strasse 48**
**D-5090 Leverkusen(DE)**
Erfinder: **Kopp, Richard, Dr.**
**Bilharzstrasse 15**
**D-5000 Köln 80(DE)**
Erfinder: **Bock, Manfred, Dr. Mobay Corp.**
**Plastics and Rubber Division Mobay Road**
**Pittsburgh, PA 15205(US)**
Erfinder: **Clarenz, Werner, Dr.**
**Wagnerstrasse 21**
**D-5060 Bergisch Gladbach 2(DE)**

(54) Verfahren zur Herstellung von in der Wärme härtbaren Einkomponenten-Polyurethan-Polyharnstoff-Systemen.

(57) Die vorliegende Erfindung betrifft ein Verfahren zur Herstellung von lagerstabilen, bei erhöhter Temperatur härtbaren Polyurethan-Reaktiv-Systemen, wobei man

A) bis zu Maximaltemperaturen zwischen 70 und 130°C lagerstabile, bei Raumtemperatur gegebenenfalls kristallisierte Suspensionen fester, in Folge von an der Polyisocyanat-Korn-Oberfläche erfolgter Reaktion mit aliphatischen Polyaminen, Hydrazinen oder Hydrazidverbindungen mit Molekulargewichten von 32 bis 399 durch Polyaddukt-Umhüllung stabilisierter Polyisocyanate in Polyolen mit Molekulargewichten von 62 bis 8000 und/oder aromatischen Polyaminen mit Molekulargewichten von 108 bis 8000 und/oder aliphatischen Polyaminen mit Molekulargewichten von 400 bis 8000, mit einem Überschuß reaktionsfähiger NCO-Gruppen gegenüber NCO-reaktiven Gruppen und

gegebenenfalls Füllstoffe sowie übrige Hilfs-und Zusatzstoffe enthaltende Polyol- und/oder Polyamin-Mischungen, die den Rest der stöchiometrisch notwendigen OH- und $NH_2$-Äquivalente mitbringen, räumlich getrennt herstellt und erst vor der bestimmungsgemäßen Verwendung A) mit B) bei Temperaturen unterhalb der Aufdicktemperatur der fertigen Reaktivmischung, bevorzugt bei Temperaturen zwischen 0 und 50°C zur fertigen Reaktivmasse vermischt.

EP 0 303 183 A2

# Verfahren zur Herstellung von in der Wärme härtbaren Einkomponenten-Polyurethan-Polyharnstoff-Systemen

Die vorliegende Erfindung betrifft ein Verfahren zur Herstellung von bei Raumtemperatur stabilen, bei höherer Temperatur schnell verfestigenden Polyurethan-Polyharnstoff-Reaktivmassen, wobei man A) eine konzentrierte, durch Polyaddukt-Umhüllung stabilisiertes festes, feinverteiltes Polyisocyanat im Überschuß und Polyole und/oder Polyamine im Unterschuß enthaltende lagerstabile Isocyanatzubereitung und B) eine gegebenenfalls mineralische Füllstoffe sowie übrige Hilfs- und Zusatzstoffe in feinverteilter oder gelöster Form enthaltende Polyol- und/oder Polyamin-Zubereitung räumlich getrennt herstellt und danach zu einem beliebigen Zeitpunkt, auf jeden Fall aber spätestens vor dem bestimmungsgemäßen Gegrauch die beiden Zubereitungen A) und B) bei einer Temperatur oberhalb der Schmelztemperatur der in den beiden Zubereitungen A) und B) enthaltenden Polyol- und/oder Polyamin-Komponenten, aber unterhalb der Aufdicktemperatur der fertigen Reaktivmasse im stöchiometrisch notwendigen Mengenverhältnis zur fertigen Reaktivmasse miteinander vermischt. Derartige Reaktivmassen eignen sich z.B. besonders gut als Abdicht-, Klebstoff- und Beschichtungsmassen, insbesondere im KFZ-Bau und zur Herstellung von technischen Kunststoff-Artikeln.

Es ist bekannt, daß Abdicht-, Klebstoff- und Beschichtungsmassen, die insbesondere im KFZ-Bau Verwendung finden, mineralische Füllstoffe enthalten, um bestimmte anwendungstechnische Eigenschaften zu erzielen. So verbessern diese Füllstoffe z.B. die Schalldämmung, vermindern den Verlauf durch ihre die Viskosität erhöhende und in manchen Fällen zusätzlich thixotropierende Wirkung, erhöhen die Härte und die Abriebfestigkeit, verbessern die Haftung an Werkstoffen wie z.B. Metallen oder Kunststoffen und dienen nicht zuletzt auch zur Preiserniedrigung.

So kann es auch bei den bekannten (vgl. DE-OS 32 30 757 und DE-OS 3 112 054) hitzehärtbaren Einkomponenten-Polyurethan-Harnstoff-Reaktivmassen auf Basis von durch Polyaddukt-Umhüllung stabilisierten, festen, feinverteilten Polyisocyanaten erforderlich sein, mineralische Füllstoffe neben anderen Hilfs- und Zusatzstoffen mitzuverwenden, z.B. wenn diese Reaktivmassen im KFZ-Bau Verwendung finden sollen.

Die Praxis zeigt jedoch, daß mineralische Füllstoffe meist sehr abrasiv wirken und daher beim Einarbeiten in eine Suspension von durch Polyaddukt (bevorzugt Polyharnstoff)-Umhüllung stabilisiertem festem Polyisocyanat die auf dem Polyisocyanat befindliche Schutzhülle so weit schädigen, daß die Lagerstabilität der Isocyanat-Suspension verloren geht. Die nun Füllstoff enthaltenden Zubereitungen beginnen innerhalb weniger Minuten oder Stunden unter gleichzeitig stattfindender Auflösung und Polyadditionsreaktion des Polyisocyanates mit der als Suspendiermedium und gleichzeitig als Reaktivkomponente dienenden Polyol- und/oder Polyaminkomponente unter Viskositätsanstieg abzureagieren. Die Polyadditionsreaktion von bei Raumtemperatur kristallisierten, bei mäßig erhöhter Temperatur jedoch flüssigen Reaktivmischungen wird bei Raumtemperatur durch den kristallinen Zustand zwar gebremst, jedoch nicht völlig verhindert. Die selben Schwierigkeiten ergeben sich, wenn man in umgekehrter Reihenfolge versucht, in eine Füllstoffe enthaltende Polyol- und/oder Polyamin-Abmischung feste,pulverförmige Polyisocyanate unter gleichzeitiger Polyharnstoff-Umhüllung einzuarbeiten. Das Einwirken der zur gleichmäßigen Suspendierung des festen Polyisocyanats erforderlichen Scherkräfte in Gegenwart von abrasiv wirkenden mineralischen Füllstoffen führt auch bei dieser umgekehrten Verfahrensweise zu einer Aufhebung der Lagerstabilität in Folge Zerstörung der Polyharstoff-Schutzhülle auf dem Polyisocyanat-Korn. Bei Anwendung von milden, die Polyharnstoff-Schutzhülle auf dem Polyisocyanat schonenden Scherkräften, wird der einzuarbeitende Feststoff, d.h. entweder das Polyisocyanat oder der mineralische Füllstoff, nicht genügend gleichmäßig suspendiert.

Eine weitere Schwierigkeit ergibt sich beim Einsatz von bei Raumtemperatur festen, bei leicht erhöhter Temperatur (20 bis 80 °C, insbesondere 30 bis 60 °C) jedoch aufschmelzbaren Polyol- und/oder Polyamin-Komponenten als Suspendiermedium und Reaktivkomponente zur Herstellung von Einkomponenten-Polyurethanpolyharnstoff-Reaktivmassen. Derartige feste Komponenten sind insbesondere Polyester mit endständigen OH- oder $NH_2$-Gruppen und Polyether mit hohem Polyethylenoxid- oder Poly-THF-Anteil und endständig OH- oder $NH_2$-Gruppen. Mit bei Raumtemperatur festen Polyolen und/oder Polyaminen hergestellte Einkomponenten-Polyurethan-Polyharnstoff-Reaktivmassen müssen vor ihrem Einsatz naturgemäß aufgeschmolzen werden. Damit der Aufschmelzvorgang in vertretbarer Zeit abgeschlossen ist, müssen Gebinde mit erstarrtem Inhalt bei einer deutlich über dem Schmelzpunkt des Inhalts liegenden Temperatur aufgeheizt werden. Die oberste Grenze für die zum Aufschmelzen verwendbare Temperatur ist jedoch durch die sogenannte "Aufdicktemperatur" der Reaktivmischung gegeben, die zumeist nur etwa 20 bis 30 °C über der Schmelztemperatur der darin enthaltenen Polyol- und/oder Polyaminkomponente liegt. Die Aufdicktemperatur ist die Temperatur, auf die eine bei Raumtemperatur lagerstabile, Isocyanat enthaltende

2

Zubereitung kurzfristig, d.h. wenige Stunden, gerade noch erhitzt werden kann, ohne daß Polyadditionsreaktion eintritt.

Ein Behälter, der eine fertig formulierte Reaktivmischung mit bei Raumtemperatur überwiegend in erstarrter Form vorliegenden Reaktivbestandteilen enthält, kann daher zum Erzielen einer möglichst hohen Aufschmelzrate nicht bei beliebig hoher Umgebungstemperatur aufgeheizt werden. Die aufgeschmolzene Isocyanat-Suspension würde in der Randzone des Behälters zunehmend irreversibel verfestigen und daher für die weitere Verwendung unbrauchbar werden. Somit sind beim Aufschmelzen von bei Raumtemperatur kristallisierten Einkomponenten-Polyurethan-Reaktivmassen keine praxisgerecht kurzen Aufschmelzzeiten möglich.

Aufgabe der vorliegenden Erfindung war es daher, eine Herstellungs- und Verarbeitungsweise für hitzehärtbare, gegebenenfalls mineralische Füllstoffe enthaltende Einkomponenten-Polyurethan-Polyharnstoff-Reaktivmischungen zu finden, die die soeben geschilderten Nachteile des Standes der Technik nicht besitzt. Diese Nachteile sind die Beschränkungen, die durch die Natur der durch vorzugsweise Polyharnstoff-Umhüllung stabilisierten Polyisocyanate gegeben sind.

Erstens: Eine flüssige bzw. aufgeschmolzene, durch Umhüllung stabilisiertes Polyisocyanat enthaltende Zubereitung darf insbesondere in Gegenwart von mineralischen Füllstoffen nicht zu hohen Scherkräften ausgesetzt werden.

Zweitens: Aufzuschmelzende Zubereitungen dürfen nur bei mäßig erhöhter Umgebungstemperatur aufgeheizt werden.

Die Aufgabe konnte überraschend dadurch gelöst werden, daß die gegebenenfalls Füllstoffe enthaltenden Einkomponenten-Polyurethan-Polyharnstoff-Reaktivmassen zunächst in zwei Teilen hergestellt werden und erst im letzten Verarbeitungsschritt unter Einwirkung milder, die Polyharnstoffhülle auf dem Polyisocyanat-Korn schonender Scherkräfte zur fertigen Einkomponenten-Reaktivmasse abgemischt werden.

Anteil A) ist eine Paste oder eine Suspension, die gegebenenfalls bei Raumtemperatur auch als erstarrte Masse vorliegen kann, aus einem festen, pulverförmigem, durch Polyharnstoffumhüllung stabilisierten Polyisocyanat und einem Polyol- und/oder Polyamin(-Gemisch). Der zweite Anteil B) enthält die restliche, zur Bildung eines Polyurethan-Polyharnstoffs stöchiometrisch notwendige Menge des Polyols und/oder Polyamins sowie gegebenenfalls mineralische Füllstoffe und weitere Hilfs- und Zusatzstoffe.

Die als Suspendiermedium sowohl für das feste, durch Polyharnstoffumhüllung stabilisierte Polyisocyanat, als auch für die mineralischen Füllstoffe sowie übrigen Hilfs- und Zusatzstoffe dienenden Polyole und/oder Polyamine können bei Raumtemperatur fest oder flüssig sein. Zum Einarbeiten von Polyisocyanat bzw. Füllstoff müssen die Polyole und/oder Polyamine in jedem Fall in flüssiger Form vorliegen. Feste Polyole bzw. Polyamine müssen also zunächst aufgeschmolzen werden. Die Schmelztemperaturen von in der PUR-Technologie üblichen, bei Raumtemperatur festen Polyol- und/oder Polyamin-Komponenten liegen im allgemeinen zwischen 20 und 80 °C, insbesondere zwischen 30 und 60 °C. Die Polyisocyanat-Zubereitung A) und die Füllstoff-Zubereitung B) können demzufolge entweder als flüssige Suspension oder als erstarrte Suspension in Form von kompakten Blöcken, von Platten oder von Granulaten der verschiedensten Kornformen und Korngrößen vorliegen.

Bei Raumtemperatur flüssige Zubereitungen A) und B) können direkt zur fertig formulierten Reaktivmasse miteinander vermischt werden.

Zur Herstellung von fertig formulierten Reaktivmassen, die als Polyol- bzw. Polyamin-Komponente überwiegend bei Raumtemperatur feste Stoffe enthalten, müssen sowohl die Polyisocyanat-Zubereitung A) als auch die gegebenenfalls Füllstoffe enthaltende Zubereitung B) aufgeschmolzen werden. Ein Vorrats- oder Lagerbehälter, der die Komponente B) in erstarrter Form enthält, kann zum Beschleunigen des Aufschmelzvorgangs bei einer Umgebungstemperatur, die deutlich über dem Schmelzpunkt der in ihnen enthaltenen Polyole und/oder Polyamine liegt, aufgeheizt werden. Die Polyisocyanat-Zubereitung A) kann aus den selben Gründen, wie sie im vorangegangenen Abschnitt über fertigformulierte, bei Raumtemperatur kristallisierte Einkomponenten-Reaktivmischungen dargelegt wurden, nicht bei beliebig hoher Umgebungstemperatur aufgeschmolzen werden. Sie kann jedoch, wie in den folgenden Ausführungen näher beschrieben ist, mit gutem Effekt in die aufgeschmolzene Komponente B) eingerührt werden.

Aus der Aufteilung des Ansatzes in eine Isocyanatkomponente A) und eine Polyol/Polyaminkomponente B) ergeben sich folgende Vorteile:

1. Die beiden Teile A) und B) können unter Einwirkung milder Scherkräfte in einem beliebigen einfachen Rühraggregat, z.B. einem Planetenmischer, zur fertig formulierten Reaktivmasse mit gleichmäßig verteiltem Feststoff-Polyisocyanat und Füllstoff vermischt werden, ohne daß die Schutzhülle auf dem festen Polyisocyanat durch Einwirkung der Füllstoffe beschädigt wird.

3

2. Die Isocyanatkomponente A) kann gegebenenfalls in fester Form, vorteilhafterweise als Granulat, in die vollständig aufgeschmolzene und bei einer Temperatur zwischen der Schmelztemperatur der in A) und B) befindlichen Polyol- und/oder Polyamin-Komponenten und der Aufdicktemperatur der herzustellenden PUR-Reaktivmischung befindlichen Komponente B) eingetragen und unter gleichzeitigem Aufschmelzen gleichmäßig darin verrührt werden. Der Wärmeinhalt der Komponente B) muß dabei nur so groß sein, daß er ausreicht, die in fester Form zugemischte Komponente A) völlig aufzuschmelzen. Eine mögliche unzulässige Überhitzung einer bereits festes Polyisocyanat enthaltenden fertig formulierten Reaktivmischung, während des Aufheizvorganges, wird so ausgeschlossen.

3. Reaktivmischungen mit niedrigem Füllstoffgehalt oder ohne Füllstoff neigen beim Lagern stark zum Sedimentieren des Feststoff-Isocyanates. Vor der Verwendung muß das Isocyanat vom Boden des Lagergefäßes aufgerührt und homogen verteilt werden. Das mechanisch aufwendige Abschaben und Aufrühren des Isocyanates vom Gefäßboden wird vermieden, wenn das Isocyanat von vornherein in batch-Form als Paste oder Granulat gehandhabt wird und erst kurz (Stunden oder wenige Tage) vor der Verarbeitung in den Rest des Polyol/Polyamins (Komponente B) eingerührt wird.

4. Die zur wirksamen Stabilisierung des Feststoff-Isocyanates notwendige Menge an aliphatischem Amin befindet sich notwendigerweise vollständig in der Komponente A). Da hierin jedoch erfindungsgemäß die Menge an Polyamin/Polyol gegenüber der zur PUR-Bildung stöchiometrisch notwendigen Menge verringert ist, ergibt sich eine erhöhte Konzentration an stabilisierendem aliphatischem Amin gegenüber seiner Konzentration im fertig formulierten Ansatz. Durch diesen Umstand liegen die Aufdicktemperaturen und damit die höchstzulässigen Lagertemperaturen für das Isocyanat-batch A) um etwa 5-30, meist etwa 10 bis 20 °C höher als in der fertig formulierten Reaktivmischung. Somit können Lagerstabilitätsprobleme, die bei Formulierungen mit kritisch niedrigen Aufdicktemperaturen auftreten, wirksam umgangen werden.

Gegenstand der Erfindung ist somit ein Verfahren zur Herstellung von heißhärtenden Zusammensetzungen, welches dadurch gekennzeichnet ist, daß man A) eine durch Polyaddukt-Umhüllung stabilisiertes, festes, feinverteiltes Polyisocyanat im Überschuß and Polyole und/oder Polyamine im Unterschuß enthaltende lagerstabile Isocyanatzubereitung und B) eine gegebenenfalls mineralische Füllstoffe sowie übrige Hilfs- und Zusatzstoffe enthaltende Polyol- und/oder Polyamin-Zubereitung getrennt herstellt und die beiden Zubereitungen A) und B) anschließend bei einer Temperatur zwischen der Schmelztemperatur der in A) und B) enthaltenen Polyole und/oder Polyamine und der Aufdicktemperatur der fertigen Reaktivmasse unter Einwirkung schonender Scherkräfte zur fertig formulierten Einkomponenten-Polyurethan-Polyharnstoff-Reaktivmasse abmischt.

Zur Herstellung der erfindungsgemäßen Zusammensetzungen stellt man als Komponente A) eine Isocyanatkomponente, d.h. ein Granulat oder eine Paste, her, die gegenüber dem festen, feinteiligen, stabilisierten Polyisocyanat einen molaren Unterschuß des NCO-reaktiven Suspendiermediums enthält. Die Größe dieses Unterschusses unterliegt keinem unmittelbaren Zwang. Sie errechnet sich aus den Molekulargewichten und Massenverhältnissen der im Einzelfall eingesetzten Komponenten. Die Massenverhältnisse sind über die spezifischen Gewichte mit den Volumenverhältnissen verknüpft. Das Volumenverhältnis Feststoff-Polyisocyanat zu Suspendiermedium schließlich wird nach oben hin durch physikalische Gegebenheiten, nach unten hin durch die Wünsche des Verarbeiters begrenzt. Bei Überschreitung des maximal möglichen Volumenverhältnisses bleiben zwischen den Feststoffteilchen luftgefüllte Hohlräume und es resultieren nur noch bröckelige Massen. Der Isocyanatgehalt und damit die Konsistenz des Isocyanatbatches richtet sich nach den technischen Gegebenheiten und den Wünschen beim Verarbeiter. Bei Unterschreiten eines Verhältnisses Isocyanat zu Suspendiermedium, welches von der für eine PUR-Bildung stöchiometrisch richtigen Zusammensetzung nicht mehr weit entfernt ist, wird das Wesen der Erfindung, Aufteilung des Ansatzes in ein Isocyanat-batch und den Rest des Polyols/Polyamins, nicht mehr erfüllt. Das Äquivalentverhältnis von Polyol/Polyamin zu Isocyanat im Isocyanat-batch A) kann zwischen 0,05 und 0,95 liegen. Eine nähere Eingrenzung dieses Verhältnisses ist aufgrund der vorgenannten Tatsachen nicht möglich.

Komponente B) bringt die zur Polyurethanbildung stöchio metrisch notwendige Restmenge an NCO-reaktiven Stoffen mit, so daß sich eine Kennzahl (Verhältnis NCO-Äquivalente zu Äquivalenten an NCO-reaktiven Stoffen x 100) von 50 bis 200, vorzugsweise 90 bis 135 einstellt. Gegebenenfalls werden in Komponente B) die gewünschten Füllstoffe sowie sonstige Hilfs- und Zusatzstoffe eingearbeitet. Als Mischaggregate können für diesen Vorgang die in der Dispergiertechnik üblichen Mischaggregate ohne Einschränkung verwendet werden. Eine Beeinträchtigung der Stabilität der Schutzhülle auf dem festen Isocyanat ist nicht zu erwarten, da dieses ja mindestens bis zum Ende des Dispergiervorgangs von B) räumlich getrennt in der Komponente A) vorliegt.

Bei Raumtemperatur lagerstabile, in der Hitze dagegen härtbare Einkomponenten-Polyurethan-Polyharnstoff-Reaktivsysteme, im folgenden kurz "Polyurethane" genannt, sind bekannt. Sie bestehen aus

EP 0 303 183 A2

festen, durch Polyaddukt (vorzugsweise Polyharnstoff)-Umhüllung stabilisierten festen Polyisocyanaten und nieder- und/oder höhermolekularen, mit Isocyanatgruppen reaktiven Verbindungen, vorzugsweise Polyolen und/oder Polyaminen (vgl. DE-OS 31 12 054 und DE-OS 32 30 757). Die durch Reaktion mit z.B. Polyaminen, Amidinen, Hydrazin(en) oder Hydrazidverbindungen mit -CO-NH.NH$_2$-Endgruppen stabilisierten, festen Polyisocyanat-Teilchen verhalten sich unterhalb der sogenannten Aufdicktemperatur äußerlich inert. oberhalb der Aufdicktemperatur beginnt die Polyadditionsreaktion abzulaufen.

In diesen sogenannten Einkomponenten-PUR-Systemen sind die Reaktionskomponenten vorzugsweise in dem für die Herstellung der fertigen Polyurethane bereits richtigen Mengenverhältnis enthalten. Die ausgehärteten Polyurethane werden durch einfaches Erhitzen des Einkomponentensystems auf Temperaturen von 70-180°C, bevorzugt 100 bis 130°C hergestellt.

Bevorzugt sind Zusammensetzungen, in denen Isocyanate und Amine bzw. Polyole in solchen Mengen enthalten sind, daß eine Kennzahl von 50 bis 200, vorzugsweise 90 bis 135, eingehalten wird.

Als feste Polyisocyanate kommen solche in Frage, die einen Schmelzpunkt über 40°C, vorzugsweise über 80°C aufweisen, z.B. 1,5-Naphthalin-diisocyanat, dimeres 4,4'-Diisocyanatodiphenylmethan, dimeres 2,4-Diisocyanatotoluol, 3,3'-Diisocyanato-4,4'-dimethyl-N,N'-diphenylharnstoff und N,N'-Bis[4(4- oder 2-isocyanato-phenylmethyl)phenyl]harnstoff. Besonders bevorzugt sind dimeres 2,4-Diisocyanatotoluol und 3,3'-Diisocyanato-4,4'-dimethyl-N,N'-diphenylharnstoff.

Die Polyisocyanate werden durch Einwirkung von vorzugsweise aliphatischen Polyaminen mit Molekulargewichten von 32-399 und gegebenenfalls durch Einwirkung von aliphatischen Polyaminen mit Molekulargewichten von 400 bis 8000 "desaktiviert" (stabilisiert). Als Beispiele für derartige Polyamine seien genannt: Ethylendiamin, 1-Amino-3,3,5-trimethyl-5-aminomethyl-cyclohexan, 3,3'-Dimethyl-4,4'-diaminodicyclohexylmethan, Diethylentriamin, Methylnonandiamin.

Als Stabilisatoren kommen z.B. ferner in Frage: Hydrazin, zumeist in Form von Hydrazinhydrat, C$_1$-C$_6$-alkylsubstituierte Hydrazine, z.B. Methylhydrazin, Ethylhydrazin, Hydroxyethyl-hydrazin oder N,N'-Dimethylhydrazin, Verbindungen mit Hydrazid-Endgruppen wie z.B. Carbodihydrazid, Ethylen-bis-carbazinester, β-Semicarbazido-propionsäurehydrazid oder Isophoron-bis-semicarbazid. Weitere Desaktivierungsmittel sind in den DE-OS 3 230 757 und 3 112 054 aufgezählt.

Als Stabilisatoren für die Isocyanatkomponente können auch offenkettige, mono- oder bicyclische Amidine bzw. Guanidine, welche keine gegenüber Isocyanaten reaktiven Wasserstoffatome aufweisen, verwendet werden. Als Beispiele für derartige Verbindungen seien genannt: Tetramethylguanidin, Pentamethylguanidin, 1,2-Dimethyl-tetrahydropyrimidin, 1,8-Diaza-bicyclo[5,4,0]-undec-7-en, 1,5-Diaza-bicyclo[4,3,0]-non-5-en. Weitere Beispiele für derartige Amidine sind in der DE 3 403 500 aufgeführt.

Als NCO-reaktives Suspendiermedium für die festen, stabilisierten Polyisocyanate werden z.B. flüssige oder niedrigschmelzende (<80°C, bevorzugt <60°C) nieder- und/oder höhermolekulare Polyole und/oder Polyamine verwendet.

Als höhermolekulare Polyole vom Molekulargewicht 400 bis 10000 können die mindestens zwei, vorzugsweise 2 bis 4, Hydroxylgruppen und in der Regel ein Molekulargewicht von 400-8000 aufweisenden Polyester, Polyether, Polythioether, Polyacetale, Polycarbonate und Polyesteramide, wie sie für die Herstellung von homogenen und von zellförmigen Polyurethanen an sich bekannt sind, verwendet werden. Beispiele hierfür sind z.B. ausführlich in der DE-OS 2 920 501, DE-OS 2 854 384 und der DE-OS 3 230 757 aufgeführt.

Auch bereits Urethan- oder Harnstoffgruppen enthaltende Polyhydroxylverbindungen sowie gegebenenfalls modifizierte, natürliche Polyole, wie Rizinusöl, Kohlenhydrate oder Stärke, sind verwendbar. Auch Anlagerungsprodukte von Alkylenoxiden an Phenol-Formaldehyd-Harze bzw. an Harnstoff-Formaldehydharze können im erfindungsgemäßen Verfahren eingesetzt werden.

Auch Hydroxylendgruppen aufweisende Polybutadiene sind erfindungsgemäß geeignet, da sie besonders elastische und hydrolysenstabile Produkte ergeben. Es können gegebenenfalls auch Polyhydroxylverbindungen eingesetzt werden, in welchen hochmolekulare Polyaddukte bzw. Polykondensate oder Polymerisate in feindisperser oder auch gelöster Form enthalten sind.

Polyaddukthaltige Polyhydroxylverbindungen werden erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in o.g., Hydroxylgruppen aufweisenden Verbindungen, ablaufen läßt.

Auch durch Vinylpolymerisate modifizierte Polyhydroxylverbindungen, wie sie z.B. durch Polymerisation von Styrol und Acrylnitril in Gegenwart von Polyethern oder Polycarbonatpolyolen erhalten werden, sind für das erfindungsgemäße Verfahren geeignet.

Vertreter dieser erfindungsgemäß zu verwendenden Verbindungen sind z.B. in High Polymers, Vol. XVI, "Polyurethanes, Chemistry and Technology", verfaßt von Saunders-Frisch, Interscience Publishers, New

5

York, London, Band I, 1962, Seiten 32-42 und Seiten 44 und 54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45 bis 71, und in der DE-OS 2 854 384 und 2 920 501 beschrieben.

Geeignete Polyole sind auch hydroxylgruppenhaltige Polymerisate, beispielsweise Copolymerisate aus olefinisch ungesättigten Monomeren und olefinisch ungesättigten Monomeren mit aktivem Wasserstoff. Sie werden beispielsweise in der EP-A 62 780, Seite 5 und deren Beispielen beschrieben. Sie finden vorzugsweise Anwendung für Dichtungs-, Füll-, Kleb- oder Unterbodenschutzmassen.

Selbstverständlich können Mischungen der obengenannten Verbindungen mit mindestens zwei gegenüber Isocyanaten reaktionsfähigen Wasserstoffatomen, z.B. Mischungen von Polyethern und Polyestern, eingesetzt werden.

Als in den Suspensionen gegebenenfalls enthaltene Polyole kommen auch niedermolekulare Kettenverlängerer oder Vernetzer in Frage. Bei diesen Kettenverlängerern oder Vernetzern handelt es sich insbesondere um mindestens zweifunktionelle Verbindungen, welche an aliphatische und/oder cycloaliphatische Gruppen gebundene Hydroxylgruppen und Molekulargewichte zwischen 62 und 399 aufweisen. Bevorzugt sind dabei niedermolekulare Diole mit an aliphatische oder cycloaliphatische Gruppen gebundenen Hydroxylgruppen des Molekulargewichtsbereichs 62 bis 399.

Diese Verbindungen weisen in der Regel 2 bis 8, vorzugsweise 2 bis 4, besonders bevorzugt jedoch 2, Hydroxylgruppen auf. Es können selbstverständlich auch Mischungen von verschiedenen Verbindungen verwendet werden. Als Beispiele für derartige Verbindungen seien genannt : Ethylenglykol, Diethylenglykol, Triethylenglykol, Tetraethylenglykol, Trimethylenglykol, Butandiol-2,3 und/oder -1,4, Pentadiol-1,5, Hexandiol-1,6, Neopentylglykol, 1,4-Bis-hydroxyethyl-cyclohexan, 1,4-Dihydroxycyclohexan, Terephthalsäure-bis($\beta$-hydroxyethyl)ester, 1,4,3,6-Dianhydrohexite, 1,4-Monoanhydrotetrite, Propylenglykol, Dipropylenglykol, Tripropylenglykol, Tetrapropylenglykol, Bis-2-hydroxyethyl-hydrochinon, Bis-(2-hydroxyethyl)-resorcin. Als mehrwertige Verbindungen seien genannt: Trimethylolpropan, Trimethylolethan, Hexantriol-1,2,6, Glycerin, Pentaerythrit, Chinit, Mannit, Sorbit, Rizinusöl sowie Formose oder Formit.

Ferner sind geeignet tertiäraminhaltige Di- oder Polyole, z.B. N-Methyldiethanolamin, Triethanolamin oder N,N'-Bis-hydroxyethylpiperazin.

Es sind auch Diole mit zusätzlichen Gruppen einsetzbar, z.B. Adipinsäure-bis-(2-hydroxyethyl)-ester, Terephtalsäure-bis-(2-hydroxyethyl)-ester, Diol-urethane, Diol-harnstoffe oder Polyole, welche Sulfonat- und/oder Phosphonatgruppen enthalten, z.B. 1,6-Hexamethylen-bis-(2-hydroxyethylurethan), 4,4'-Diphenylmethan-bis-(2-hydroxyethylharnstoff) oder das Addukt von Na-Bisulfit an Butandiol-1,4, bzw. dessen Alkoxylierungsprodukte. Weitere niedermolekulare Verbindungen werden ausführlich in der DE-A 2 854 384 beschrieben.

Die obengenannten nieder- und höhermolekularen Polyole können gegebenenfalls durch Vorreaktion mit einem Unterschuß Polyisocyanat modifiziert sein.

Als Polyisocyanate kommen hierfür aliphatische, cycloaliphatische, araliphatische, aromatische und/oder heterocyclische Polyisocyanate in Betracht, wie sie z.B. in der DE-OS 2 920 501 (S. 12 bis 16) aufgeführt sind.

Besonders bevorzugt werden in der Regel die technisch leicht zugänglichen Polyisocyanate, z. B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI"), 4,4'- und/ oder 2,4'-Diphenylmethan-diisocyanat, 1,6-Hexamethylendiisocyanat, 1-Isocyanato-3,3,5-trimethyl-5-isocyanatomethyl-cyclohexan, Perhydro-2,4'- und/oder -4,4'-diphenylmethan-diisocyanat.

Als NCO-reaktives Suspendiermedium für die festen, stabilisierten Polyisocyanate können auch flüssige oder niedrigschmelzende (<80°C, bevorzugt <60°C) nieder- und/oder höhermolekulare, aromatische und/oder aliphatische Polyamine verwendet werden.

Bevorzugt werden höhermolekulare aliphatische und/oder höher- oder niedermolekulare aromatische Polyamine. Niedermolekulare aliphatische Polyamine sind als Stabilisatoren darin höchstens in untergeordneten Mengen enthalten. Größere Mengen freier niedermolekularer aliphatischer Polyamine würden eine Überstabilisierung bewirken. Nur in Form von Polyharnstoffen chemisch gebunden niedermolekulare aliphatische Polyamine dürfen in größeren Mengen enthalten sein.

Als höhermolekulare Polyaminoverbindungen mit aromatischen Aminogruppen mit einem Molekulargewichtsbereich von 400 bis 8000 werden insbesondere solche Polyaminoverbindungen eingesetzt, wie sie durch Hydrolyse von entsprechenden NCO-Prepolymeren auf der Basis von höhermolekularen Polyhydroxylverbindungen und überschüssigen aromatischen Diisocyanaten durch (vorzugsweise basische) Hydrolyse hergestellt werden können. Beispiele für dieses Verfahren werden in der DE-OS 2 948 419, DE-OS 3 039 600, DE-OS 3 112 118, der EP-A-61 627, EP-A-71 132 und EP-A-71 139 angegeben. In der erstgenannten Patentschrift werden auch weitere Verfahren des Standes der Technik zur Herstellung von aromatischen Aminoverbindungen höhermolekularer Struktur genannt. Es handelt sich bei dem Verfahren nach DE-OS 2 948 419 und den anderen zitierten Patentschriften vorzugsweise um Polyether-Polyamine, aber auch Polyester-, Polyacetal-, Polythioether- oder Polycaprolacton-Polyamine, vorzugsweise 2- oder 3-funktionelle Polyamine, welche Urethangruppen (aus der Reaktion der entsprechenden höhermolekularen Polyhydroxylverbindungen mit den überschüssigen Polyisocyanaten) enthalten und die Aminogruppen an dem Rest des (ehemaligen) Polyisocyanats tragen. Die aromatischen, höhermolekularen Polyamine können jedoch auch nach anderen Verfahren, z.B. durch Umsetzung von NCO-Prepolymeren mit überschüssigen Mengen an Hydrazin, Aminophenylethylamin, oder anderen Diaminen entsprechend DE-AS 1 694 152 hergestellt werden; eine andere Synthesemöglichkeit beschreibt die FR-PS 1 415 317 durch Überführung der NCO- Prepolymere mit Ameisensäure in die N-Formylderivate und deren Verseifung. Auch die Umsetzung von NCO-Prepolymeren mit Sulfaminsäure gemäß DE-AS 1 155 907 führt zu höhermolekularen Polyaminen.

Als höhermolekulare Polyaminoverbindungen mit aliphatischen Aminogruppen mit einem Molekulargewichtsbereich von 400 bis 8000, vorzugsweise von 1000 bis 4000 werden z.B. solche eingesetzt, wie sie durch reduktive Aminierung von Polyoxyalkylenglykolen mit Ammoniak nach BE-PS 634 741 und US-PS 3 654 370 erhalten werden. Weitere höhermolekulare Polyoxyalkylen-Polyamine können nach Methoden, wie sie in der Firmenschrift "Jeffamine, Polyoxypropylene Amines" von Texaco Chemical Co., 1978, aufgezählt werden, hergestellt werden, beispielsweise durch Hydrierung von cyanethylierten Polyoxypropylenglykolen (DE-OS 1 193 671), durch Aminierung von Polypropylenglykolsulfonsäureestern (US-PS 3 236 895), durch Behandlung eines Polyoxyalkylenglykols mit Epichlorhydrin und einem primären Amin (FR-PS 1 466 708) oder durch Umsetzung von NCO-Prepolymeren mit Hydroxylgruppen aufweisenden Enaminen, Aldiminen oder Ketiminen und anschließende Hydrolyse gemäß DE-OS 2 546 536. Geeignete höhermolekulare aliphatische Di- und Polyamine sind auch die nach DE-OS 29 48 419, DE-OS 3 039 600, DE-OS 3 112 118, der EP-A 61 627, EP-A 71 132 und EP-A 71 139 durch alkalische Hydrolyse von NCO-Prepolymeren (mit aliphatischen Diisocyanaten) mit Basen über die Carbamatstufe zugänglichen Polyamine.

Es handelt sich bei dem Verfahren nach DE-OS 2 948 419 und den anderen zitierten Literaturstellen vorzugsweise um Polyether-Polyamine, aber auch Polyester-, Polyacetal-, Polythioether- oder Polycaprolacton-Polyamine, vorzugsweise 2- oder 3-funktionelle Polyamine, welche Urethangruppen (aus der Reaktion der entsprechenden höhermolekularen Polyhydroxylverbindungen mit den überschüssigen Polyisocyanaten) enthalten und die Aminogruppen an dem Rest des (ehemaligen) Polyisocyanats tragen. Die höhermolekularen Polyamine können jedoch auch nach anderen Verfahren, z.B. durch Umsetzung von NCO-Prepolymeren mit überschüssigen Mengen an Diaminen entsprechend DE-AS 1 694 152 hergestellt werden; eine andere Synthesemöglichkeit beschreibt die FR-PS 1 415 317 durch Überführung der NCO- Prepolymere mit Ameisensäure in die N-Formylderivate und deren Verseifung.

Diese höhermolekularen, aliphatischen Polyamine können sowohl als Stabilisatoren für die Polyisocyanatkomponente als auch als weitere als Suspendiermedium dienende Komponente Verwendung finden.

Als Kettenverlängerer können niedermolekulare aromatische Diamine des Molekulargewichtsbereiches 108 bis 399 eingesetzt werden. Unter aromatischen Polyaminen sollen auch solche Amine verstanden werden, welche die Aminogruppe an heterocyclische Reste mit aromatischem Charakter gebunden enthalten. Als aromatische Polyamine sind z.B. geeignet: p-Phenylendiamin, 2,4-/2,6-Toluylendiamine, Diphenylmethan-4,4'- und/oder -2,4'- und/oder -2,2'-diamine, 3,3'-Dichlor-4,4'-diaminodiphenylmethan, 3- ($C_1$-$C_8$)-Alkyl-4,4'-diaminodiphenylmethane, die 3,3'-Di-($C_1$-$C_4$)-4,4'-diaminodiphenylmethane sowie die 3,3',5,5'-Tetra-($C_1$-$C_4$)-alkyl-4,4'diaminodiphenylmethane, die 4,4'-Diaminodiphenyl-sulfide, -sulfoxide oder -sulfone, Ethergruppen aufweisende Diamine gemäß DE-A 1 770 525 und 1 809 172 (US-PS 3 654 364 und 3 736 295), gegebenenfalls in 5-Stellung substituierte 2-Halogen-1,3-phenylendiamine (DE-A 2 001 772, 2 025 896 und 2 065 869), Bisanthranilsäureester (DE-A 2 040 644 und 2 160 590), 2,4-Diaminobenzoesäureester nach DE-A 2 025 900, sowie durch eine oder zwei ($C_1$-$C_4$)-Alkylgruppen substituierte Toluylendia- mine. Besonders bevorzugt sind 3,5-Diethyl-2,4- und/oder -2,6-diaminotoluol (besonders ihre technischen (80/20)- oder (65/35)-Isomerengemische), unsymmetrisch tetraalkylsubstituierte Diaminodiphenylmethane, z.B. 3,5-Diethyl-3'-5'-diisopropyl-4,4'-diaminodiphenylmethan und ihre Isomerengemische entsprechend DE-A 2 902 090, 4,4'-Diaminobenzanilid sowie 3,5-Diaminobenzoesäure-($C_1$-$C_4$)-alkylester, 4,4'- und/oder 2,4'-Diamino-diphenylmethan, sowie Naphthylen-1,5-diamin.

Es ist selbstverständlich möglich, Mischungen der obengenannten Polyhydroxylverbindungen und Polyaminoverbindungen einzusetzen.

Gegebenenfalls können die üblichen Polyurethankatalysatoren, mit besonders gutem Effekt tertiäre Amine oder Metallkatalysatoren, verwendet werden.

Es sind dies z.B. tertiäre Amine, wie Triethylamin, Tributylamin, N,N,N',N'-Tetramethyl-ethylendiamin, 1,4-Diaza-bicyclo-(2,2,2)-octan, N,N-Dimethylbenzylamin, N,N-Dimethylcyclohexylamin.

7

Als organische Metallverbindungen kommen insbesondere organische Zinnverbindungen und Bleiverbindungen als Katalysatoren in Frage. Als organische Zinnverbindungen kommen vorzugsweise Zinn(II)-salze von Carbonsäuren wie Zinn(II)-ethylhexoat und Zinn(II)-stearat und die Dialkylzinnsalze von Carbonsäuren, wie z.B. Dibutylzinndilaurat oder Dioctylzinndiacetat in Betracht.

Als organische Bleiverbindungen kommen vorzugsweise Blei(II)-salze von Carbonsäuren wie Blei(II)-naphthenat, Blei(II)-ethylhexoat, Blei(II)-stearat, aber auch z.B. Blei(II)-bis-diethyldithiocarbamat in Betracht.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102, und in der DE-A 3 230 757 beschrieben.

Die Katalysatoren werden in der Regel in einer Menge zwischen etwa 0,001 und 10 Gew.-%, bezogen auf die Gesamtzusammensetzung eingesetzt.

Als gegebenenfalls enthaltene Hilfs- und Zusatzstoffe seien genannt; Farbstoffe oder Pigmente, Füllstoffe wie Schwerspat, Kreide, Quarzmehl, Kieselgur, Silicagel, Gips, Talkum, Aktivkohle, Ruß, Metallpulver, UV-Absorptionsmittel oder Stabilisatoren wie phenolische Antioxidantien, Lichtschutzmittel, Treibmittel, oberflächenaktive Zusatzstoffe wie Emulgatoren oder Schaumstabilisatoren, gegebenenfalls Zellregler, Antiblockmittel, Silicone, Flammschutzmittel, oder fungistatisch und/oder bakteriostatisch wirkende Substanzen.

Als Füllstoffe sind z.B. Fasermaterialien, d.h. alle an sich bekannten, faserförmigen Verstärkungsmaterialien einsetzbar, z.B. Glasfasern, Graphitfasern und Asbestfasern oder Fasermaterialien, die von einem organischen Polymeren stammen, z.B. von einem Polyester wie Polyethylenterephthalat, oder vorzugsweise aromatischen Polyamiden, wie dem m-Phenylen-Isophthalsäurepolyamid, oder dem Poly-p-phenylenterephthalamid, oder auch Polycaprolactam. Diese Fasermaterialien können auch als Matte, Band, durchgehende Fasern, Vlies, Stoff oder als Stapelfaserwirrgemisch vorliegen. Bevorzugt sind Glasfasern, die mit Schlichten ausgerüstet sind, um den Fasern eine Affinität zu Polyurethanen zu verleihen. Die einzubauende Füllstoffmenge hängt von der gewünschten Verbesserung der mechanischen Eigenschaften ab, im allgemeinen werden 5 bis 60 Gew.-% Fasermaterial angewendet.

Sollen nach dem erfindungsgemäßen Verfahren zellige Polyurethane hergestellt werden, dann werden Wasser und/oder leicht flüchtige organische Substanzen als Treibmittel mitverwendet. Als organische Treibmittel kommen z.B. Aceton, Ethylacetat, Methanol, Ethanol, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether in Frage.

Weitere Beispiele für Treibmittel sowie Einzelheiten über die Verwendung von Treibmitteln sind im Kunststoff-Handbuch, Band VII, herausgegeben von Vieweg und Höchtlen, Carl Hanser Verlag, München 1966, z.B. auf den Seiten 108 und 109, 453 und 455 und 507 bis 510 beschrieben.

Es können auch oberflächenaktive Zusatzstoffe (Emulgatoren und Schaumstabilisatoren) mitverwendet werden. Als Emulgatoren kommen z.B. die Natriumsalze von Ricinusölsulfonaten oder auch von Fettsäuren oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder auch von Fettsäuren wie Ricinolsäure oder von polymeren Fettsäuren können als oberflächenaktive Zusatzstoffe mitverwendet werden.

Als Schaumstabilisatoren kommen vor allem wasserlösliche Polyethersiloxane in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in der US-PS 2 764 565 beschrieben.

Es können ferner auch Reaktionsverzögerer, z.B. sauer reagierende Stoffe wie Salzsäure, organische Säurehalogenide oder organische Säuren, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trischlorethylphosphat oder Ammoniumphosphat und -polyphosphat, ferner Stabilisatoren gegen Alterungs- und Witterungseinflüsse, Weichmacher und/oder fungistatisch und bakteriostatisch wirkende Substanzen mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VI, herausgegeben von Vieweg und Höchtlen, Carl-Hanser-Verlag, München 1966, z.B. auf den Seiten 103 bis 113 und in den DE-OSen 2 854 384 und 2 920 501 beschrieben.

Je nach Viskosität und Schmelzverhalten der Ausgangskomponenten erhält man bei Raumtemperatur gießbare, rakelfähige oder streichbare PU-Reaktivmischungen. Diese Reaktivmischungen sind Suspensionen eines festen, durch Polyadduktumhüllung stabilisierten Polyisocyanats in der Polyol- und gegebenenfalls Polyamin-Komponente. Die Verfestigung dieser Mischungen erfolgt durch Hitzeeinwirkung. Die Verarbeitung der erfindungsgemäßen Systeme richtet sich nach deren Beschaffenheit. Thixotropierte Systeme können z.B. mit der Hand oder über eine geeignete Auspreß- bzw. Fördereinrichtung, z.B. über eine Kartusche oder eine Rakel auf gewünschte Unterlagen, z.B. blanke oder vorbeschichtete Bleche aus Metallen wie Eisen, Aluminium, Zink, Nickel, Chrom, Kupfer oder anderen Metallen oder deren Legierungen untereinander, auf Kunststoffteile, auf die verschiedensten technischen Artikel aus Metall, Glas, Keramik oder Kunststoff oder auch z.B. textile Unterlagen wie z.B. Vliese, Gewirke und Gewebe, (Spalt)leder, Matritzen (z.B. Verloursleder-Silicon-Matritzen), oder Zwischenträger (z.B. Trennpapiere) unter Bildung von Beschichtungen oder Zurichtungen aufgebracht und gegebenenfalls nach weiteren Handhabungs- oder technischen Verarbeitungsschritten bei erhöhter Temperatur verfestigt werden. Flüssige, bei Raumtemperatur gießbare Systeme lassen sich im Gießprozeß verarbeiten.

Die Verarbeitung kann auch im Schleuderguß erfolgen; Hohlkörper können durch Einbringung der Reaktivmasse in Formen unter Verteilung an der Oberfläche durch entsprechende Rotationsbewegungen hergestellt werden.

Bei Mitverwendung von Treibmitteln können zellige Polyurethane hergestellt werden, die gegebenenfalls eine integrale Dichtestruktur aufweisen.

Auch durch Tauchverfahren können Oberflächenbeschichtungen, Abdruckformen oder Formkörper hergestellt werden.

Die Mengenangaben in den Beispielen beziehen sich, sofern nicht anders angegeben, auf Gewichtsteile.

## Beispiel 1

Herstellung einer Abdichtmasse auf Basis eines Polyetherdiols

Herstellung des OH-Prepolymeren:

Zu 100 Teilen eines Polyoxalkylenetherdiols aus 80 Gew.-% Propylenoxid und 20 Gew.-% Ethylenoxid-Anteil mit einem Molekulargewicht von 4000 werden 0,01 Teile Pb-Octoat (Octasoligen Pb 24 der Firma Borchers, Goslar) zugesetzt. Man suspendiert 0,8 Teile dimeres 2,4-Diisocyanatotoluol (= Desmodur® TT der Firma Bayer AG), im folgenden kurz "TT" genannt, erhitzt 1 Stunde auf 100°C, setzt 1,9 Teile eines Gemisches auf 65 % 2,4- und 35 % 2,6-Diisocyanatotoluol zu, erhitzt nochmals 1 Stunde auf 100°C, setzt 0,4 Teile Isophorondiisocyanat zu und erhitzt abermals 1 Stunde auf 100°C. Das so gebildete OH-Prepolymer besitzt nach dem Abkühlen auf 22°C eine Viskosität von 55 000 mPas.

Herstellung der TT-Paste A):

In einer Mischung aus 20 Teilen des OH-Prepolymeren zu Beispiel 1, 4,0 Teilen 2,4 (35 % 2,6)-Diamino-3,5-diethyltoluol und 0,14 Teilen 4,4'-Diamino-3,3'-dimethyldicyclohexylmethan werden durch intensives Rühren (1 min lang mit 1800 U/min) 13,2 Teile pulverförmiges TT gleichmäßig suspendiert. Man entgast 1/2 Std. im Wasserstrahlvakuum bei 50°C und erhält eine fließfähige, lagerstabile TT-Paste mit einer Aufdicktemperatur (ohne weitere Zusätze) von 72°C.

Herstellung der gefüllten Polyolkomponente B):

Mit einem schnell laufenden Rührwerk (Dissolverscheibe mit 4000 U/min) werden nacheinander die im folgenden angegebenen Komponenten vermischt und die Mischung 1/2 Stunde im Wasserstrahlvakuum bei 50°C entgast:

9

80 Teile des OH-Prepolymeren zu Beispiel 1, 6 Teile pyrogene Kieselsäure (Cab-o-Sil M5 der Firma Cabot Corp., Hanau. 100 Teile K-Alumosilikat mit 3 Å Porenweite (Baylith L der Firma Bayer AG), 100 Teile Schwerspat (EWO 423N der Firma Sachtleben, Duisburg) und 1,0 Teile Pb-Octoat. Man erhält eine stark pastöse Mischung.

Herstellung der gebrauchsfertigen Abdichtmasse:

Man vermischt 37,34 Teile der TT-Paste A) zu Beispiel 1 mit 195 Teilen der Füllstoffpaste B) zu Beispiel 1 im Planetenmischer unter Entgasen und erhält eine gut verarbeitbare, lagerstabile, gut pastöse und nicht ablaufende Abdichtmasse mit guter Haftung an festen Substraten und mit einer Aufdicktemperatur von 62°C.

Ein in 1/2 Stunde bei 120°C gehärteter Probekörper besitzt die folgenden mechanischen Eigenschaften: Härte Shore A      81
Bruchdehnung      500 %
Zugfestigkeit      4,9 MPa
Weiterreißfestigkeit      16 kN/m
Rückprall-Elastizität      44 %

## Beispiel 2

Herstellung einer Abdichtmasse auf Basis eines Polyethertriols

Herstellung des OH-Prepolymeren

Zu 100 Teilen eines Polyoxyalkylenethertriols, gestartet auf Trimethylolpropan, mit 83 Gew.-% Propylenoxid und 17 Gew.-% Ethylenoxid-Anteil mit einem Molekulargewicht von 6000 werden unter starkem Rühren nacheinander 2,0 Teile Diethylentriamin und 5,07 Teile 2,4-Diisocyanatotoluol zugesetzt. Unter mäßigem Rühren wird 1/2 Stunde bei 100°C weitergerührt. Nach Zusatz von 0,01 Teilen Pb-Octoat wird nochmals 1/2 Stunde bei 100°C gerührt und zum Entgasen Vakuum angelegt. Man setzt nun 1,5 Teile Isophorondiisocyanat und nochmals 0,01 Teile Pb-Octoat zu und rührt nochmals 1 h bei 100°C unter Entgasen. Man erhält ein thixotropiertes OH-Prepolymer mit einer Viskosität von ca. 40 000 mPa.s.

Herstellung der TT-Paste A):

In einer Mischung aus 15,09 Teilen des eben beschriebenen Polyoxyalkylenethertriols, 3,0 Teilen 2,4 (35 % 2,6)-Diamino-3,5-diethyltoluol und 0,4 Teilen 4,4'-Diamino-3,3'-dimethyldicyclohexylmethan werden durch intensives Rühren (1 min lang mit 1800 U/min) 16,31 Teile pulverförmiges TT gleichmäßig suspendiert. Nach 1/2 Stunde Entgasen bei 50°C erhält man eine chemisch vollkommen lagerstabile TT-Paste mit einer Viskosität von 30 000 mPa.s und einer Aufdicktemperatur von 108°C.

Herstellung der gefüllten Polyolkomponente B):

Mit einem schnell laufenden Rührwerk (Dissolver-Scheibe mit 4000 U/min) werden nacheinander die im folgenden angegebenen Komponenten vermischt und die Mischung 1/2 Stunde im Wasserstrahlvakuum entgast:
84,91 Teile des OH-Prepolymeren zu Beispiel 2, 8 Teile K-Alumosilikat mit 3 Å Porenweite (Baylith L der Firma Bayer AG), 100 Teile Schwerspat (EWO 423 N der Firma Sachtleben) und 1,2 Teile Pb-Octoat. Man erhält eine stark pastöse Mischung.

Herstellung der gebrauchsfertigen Abdichtmasse:

Man vermischt 34,8 Teile der TT-Paste A) zu Beispiel 2 mit 194,11 Teilen der Füllstoffpaste B) zu Beispiel 2 im Planetenmischer unter Entgasen und erhält eine gut verarbeitbare, lagerstabile, gut pastöse und nicht ablaufende Abdichtmasse mit guter Haftung an festen Substraten und mit einer Aufdicktemperatur von 80° C. Ein in 1/2 Stunde bei 120° C gehärteter Probekörper besitzt die folgenden mechanischen Eigenschaften: Härte Shore A   84
Bruchdehnung   100 %
Zugfestigkeit   4,2 MPa
Weiterreißfestigkeit   9,5kN/m
Rückprall-Elastizität   46 %

Beispiel 3

Herstellung einer Abdichtmasse auf Basis eines aromatischen Polyetherdiamins

Herstellung der TT-Paste A):

In eine Mischung aus 22,77 Teilen eines aromatischen Polyetherdiamins auf Basis eines Polyoxypropylenetherdiols vom Molekulargewicht 2000 und 2,4-Toluylendiisocyanat, hergestellt nach dem Verfahren gemäß DE-OS 2 948 419, mit einem Molekulargewicht von 2296 und mit einer Viskosität von 11 000 mPa.s, und 0,44 Teilen 4,4'-Diamino-3,3'-dimethyldicyclohexylmethan werden an einer gleichläufigen Zweiwellen-Mischschnecke 17,7 Teile TT eingearbeitet. Man erhält eine leicht thixotrope, chemisch und gegen Sedimentation stabile TT-Paste mit einer Aufdicktemperatur von 98° C und einer Viskosität von 120 000 mPa.s.

Herstellung der gefüllten Polyaminkomponente B):

Mit einem schnell laufenden Rührwerk (Dissolverscheibe mit 4000 U/min) werden nacheinander die im folgenden angegebenen Komponenten vermischt und die Mischung 1/2 Stunde im Wasserstrahlvakuum bei 50° C entgast:
77,23 Teile des oben beschriebenen Polyetherdiamins, 8 Teile K-Alumosilikat mit 3 Å Porenweite (Baylith L der Firma Bayer AG), 84 Teile Schwerspat (EWO 423 N der Firma Sachtleben), sowie bei Bedarf bis zu 12 Teile pyrogene Kieselsäure (Cab-o-Sil M5 der Firma Cabot Corporation, Hanau).

Herstellung der gebrauchsfertigen Abdichtmasse:

Man vermischt 40,91 Teile der TT-Paste A) zu Beispiel 3 mit 169,23 Teilen der gefüllten (ohne pyrogene Kieselsäure) Polyamin-Komponente B) zu Beispiel 3 im Planetenmischer unter Entgasen und erhält eine gut verarbeitbare Abdichtmasse mit guter Haftung an festen Substraten und mit guter Temperaturstabilität. Ihre Aufdicktemperatur beträgt 78° C und die Viskosität ohne pyrogene Kieselsäure 60 000 mPa.s. Ein bei 120° C gehärteter Probekörper besitzt die folgenden mechanischen Eigenschaften:

EP 0 303 183 A2

|  | Temperung: | |
|---|---|---|
|  | 8 h bei 120°C | 8 h 120°C + 1 h 180°C |
| Härte Shore A | 97 | 95 |
| Bruchdehnung | 500 % | 300 % |
| Zugfestigkeit | 11,4 MPa | 10,7 MPa |
| Weiterreißfestigkeit | 40 kN/m | 32 kN/m |
| Rückprall-Elastizität | 54 % | 53 % |

Beispiel 4

Herstellung einer Gießmasse auf Polyesterbasis

Herstellung des Granulates A):

Zu 100 Teilen einer auf 60°C erwärmten Schmelze eines difunktionellen Polyesters aus Adipinsäure und Ethylenglykol vom Molekulargewicht 2000 werden 1,5 Teile 4,4'- Diamino-3,3'-dimethyl-dicyclohexylmethan und danach 90 Teile pulverförmiger 3,3'-Diisocyanato-4,4'-dimethyl-diphenylharnstoff zugesetzt. Die Suspension (Schmelze) wird mittels eines geeigneten Rührwerkes (Schnellrührer mit 1800 U/min) homogen vermischt. Anschließend wird der Ansatz 30 min lang bei 50°C im Wasserstrahlvakuum entgast. Die Schmelze wird nunmehr auf ein kaltes Blech gegossen. Nach dem Erkalten kann die Mischung auf einfache Weise mechanisch zu einem Granulat zerkleinert werden. Derartige Granulate sind bei Raumtemperatur lagerstabil und können zu einem beliebigen Zeitpunkt mit NCO-reaktiven Verbindungen zur Reaktion gebracht werden.

Herstellung der gebrauchsfertigen Gießmasse zur Formteil-Herstellung:

So werden beispielsweise zu 200 Teilen eines Polyesters mit endständigen aromatisch gebundenen $NH_2$-Gruppen vom Molekulargewicht 2490 (Komponente B), hergestellt durch alkalische Hydrolyse eines NCO-Prepolymer aus 1 Mol des obengenannten Polyesters und 2 Mol 2,4-Diisocyanatotoluol nach dem Verfahren gemäß DE-OS 2 948 419 bei 80°C unter Rühren 95 Teile des oben beschriebenen Granulates A zugesetzt. Der innerhalb kurzer Zeit völlig flüssige Ansatz wird nochmals 10 min bei 60°C entgast. Die Viskosität der fertigen Mischung beträgt bei 80°C 5000 mPa.s. Sie kann daher im Gießverfahren gut verarbeitet werden. Es gibt keine Einschränkung der Verarbeitungszeit, da sich der Ansatz bis 90°C chemisch stabil verhält, d.h. es tritt kein Viskositätsaufbau ein.

Man erhält eine hochwertiges PUR-Elastomer, wenn der Ansatz in eine auf 100°C erwärmte und mit einem üblichen Silicon-Trennmittel versehene Form gegossen wird und diese auf 150°C erhitzt wird. Nach 1 Stunde wird entformt und der Formkörper noch 4 Stunden bei 150°C nachgetempert.

Das Elastomer besitzt ein hohes mechanisches Werteniveau: Härte Shore A 94
Bruchdehnung 650 %
Zugfestigkeit 42 MPa
Weiterreißfestigkeit 78 kN/m
100 %-Modul 10 MPa
Rückprall-Elastizität 37 %

12

## Ansprüche

1. Verfahren zur Herstellung von lagerstabilen, bei erhöhter Temperatur härtbaren Polyurethan-Reaktiv-Systemen, dadurch gekennzeichnet, daß man

A) bis zu Maximaltemperaturen zwischen 70 und 130° C lagerstabile, bei Raumtemperatur gegebenenfalls kristallisierte Suspensionen fester, in Folge von an der Polyisocyanat-Korn-Oberfläche erfolgter Reaktion mit aliphatischen Polyaminen, Hydrazinen oder Hydrazidverbindungen mit Molekulargewichten von 32 bis 399 durch Polyaddukt-Umhüllung stabilisierter Polyisocyanate in Polyolen mit Molekulargewichten von 62 bis 8000 und/oder aromatischen Polyaminen mit Molekulargewichten von 108 bis 8000 und/oder aliphatischen Polyaminen mit Molekulargewichten von 400 bis 8000, mit einem Überschuß reaktionsfähiger NCO-Gruppen gegenüber NCO-reaktiven Gruppen und

B) gegebenenfalls Füllstoffe sowie übrige Hilfs- und Zusatzstoffe enthaltende Polyol- und/oder Polyamin-Mischungen, die den Rest der stöchiometrisch notwendigen OH- und $NH_2$-Äquivalente mitbringen, räumlich getrennt herstellt und erst vor der bestimmungsgemäßen Verwendung A) mit B) bei Temperaturen unterhalb der Aufdicktemperatur der fertigen Reaktivmischung, bevorzugt bei Temperaturen zwischen 0 und 50° C zur fertigen Reaktivmasse vermischt.

2. Verfahren nach Anspruch 1, dadurch gekennzeichnet, daß die Komponente A) eine Suspension eines stabilisierten dimeren Toluylendiisocyanats oder eines stabilisierten 3,3'-Diisocyanato-4,4'-dimethyl-N,N'-diphenylharnstoffs darstellt.

3. Verfahren nach Ansprüchen 1 und 2, dadurch gekennzeichnet, daß die Komponente B) zusätzlich mineralische Füllstoffe, vorzugsweise Schwerspat, Kreide, Zeolithe, feinverteilte Kieselsäure enthält.

4. Verfahren nach einem der Ansprüche 1 bis 3, dadurch gekennzeichnet, daß man in der Summe der Komponenten A) und B) Polyisocyanate und NCO-reaktive Verbindungen in solchen Mengen einsetzt, daß eine Kennzahl von 50 bis 200, vorzugsweise 90 bis 135 eingehalten wird.